(19) Europäisches Patentamt
European Patent Office
Office européen des brevets

(11) **EP 2 952 385 A1**

(12) **DEMANDE DE BREVET EUROPEEN**

(43) Date de publication:
**09.12.2015 Bulletin 2015/50**

(51) Int Cl.:
*B60Q 1/10* (2006.01)   *B60Q 1/00* (2006.01)

(21) Numéro de dépôt: **15169127.6**

(22) Date de dépôt: **26.05.2015**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA**

(30) Priorité: **03.06.2014 FR 1455035**

(71) Demandeur: **VALEO VISION**
**93012 Bobigny Cedex (FR)**

(72) Inventeur: **Robert Landry, Caroline**
**75018 Paris (FR)**

(54) **PROCÉDÉ ET SYSTÈME DE CORRECTION DE L'ORIENTATION DES PROJECTEURS D'UN VÉHICULE À MOTEUR**

(57) L'invention concerne un procédé de correction de l'inclinaison des projecteurs d'un véhicule à moteur à partir de mesures d'accélérations du véhicule fournies par un capteur porté par le véhicule à moteur. Selon l'invention, le procédé comporte une étape ($S_{30}$) de calcul de la variation d'inclinaison du véhicule entre un premier et un deuxième instants distincts définissant une durée au cours de laquelle ledit véhicule à moteur marque un unique arrêt suivi d'un redémarrage, en fonction des mesures d'accélérations, et une étape ($S_{50}$, $S_{60}$) d'asservissement de l'inclinaison des projecteurs en fonction de la variation d'inclinaison du véhicule calculée.

**FIG.1a**

**FIG.1b**

**Description**

La présente invention a trait d'une façon générale à la correction de l'orientation en site des projecteurs d'un véhicule à moteur, notamment d'un véhicule automobile.

Dans le cas de l'utilisation de certaines sources lumineuses telles que les lampes au Xénon, et bientôt les diodes électroluminescentes pour les projecteurs de véhicules automobiles, la règlementation impose une correction automatique en inclinaison des projecteurs afin que ceux-ci ne risquent pas d'éblouir les conducteurs roulant en sens inverse. La correction doit tenir compte de l'inclinaison du véhicule sur la route, en fonction de sa charge.

Aujourd'hui, il existe des solutions dans lesquelles un capteur différentiel mesure la différence de hauteur entre l'essieu arrière et l'essieu avant du véhicule. L'information est alors fournie à un système de correction. Cette solution fonctionne très bien et permet une correction dynamique de l'inclinaison des projecteurs. Néanmoins, elle nécessite un réglage en bout de chaîne de fabrication du véhicule, une fois que les projecteurs sont fixés sur ce dernier. De plus, cette solution reste coûteuse et est incompatible avec la possibilité d'équiper par la suite un véhicule qui ne posséderait pas une telle fonctionnalité à sa sortie d'usine.

Pour pallier les inconvénients précédents, la Demanderesse s'est intéressée au développement de projecteurs, ou d'ensembles comprenant des projecteurs, qui soient autonomes par rapport à la fonctionnalité de correction en inclinaison en fonction de la charge d'un véhicule.

Le choix s'est porté sur l'utilisation d'au moins un capteur de type accéléromètre pour mesurer l'inclinaison générale du véhicule et/ou de la plateforme sur laquelle est monté le module d'éclairage que l'on veut asservir en inclinaison, de préférence intégré dans au moins l'un des projecteurs d'une paire de projecteurs, voire dans chaque projecteur.

En utilisant un accéléromètre sur le véhicule ou dans le projecteur à asservir, on obtient une mesure en temps réel des accélérations du véhicule dans le référentiel terrestre. On peut donc en déduire l'inclinaison dudit véhicule ou de la plateforme du module créant le faisceau à asservir suivant la position du capteur par un calcul simple. Néanmoins, du fait de la prise de mesure dans le référentiel terrestre et non dans un référentiel lié au véhicule, cette mesure simple intègre tous les facteurs d'inclinaisons du véhicule de façon non dissociée. En particulier, Il est impossible de savoir si l'inclinaison mesurée du véhicule est due à la pente de la route, à la charge du véhicule ou encore à une combinaison des deux.

La présente invention a pour but de s'affranchir de cette problématique.

Pour ce faire, la présente invention a pour objet un procédé de correction de l'inclinaison des projecteurs d'un véhicule à moteur à partir de mesures d'accélérations du véhicule fournies par un capteur porté par le véhicule à moteur, le procédé comportant une étape de calcul de la variation d'inclinaison du véhicule entre un premier et un deuxième instants distincts définissant une durée au cours de laquelle ledit véhicule à moteur marque un unique arrêt suivi d'un redémarrage, la variation d'inclinaison étant calculée en fonction des mesures d'accélérations, et une étape d'asservissement de l'inclinaison des projecteurs en fonction de la variation d'inclinaison du véhicule calculée.

Le capteur peut être un accéléromètre ou un gyromètre. Les mesures d'accélérations fournies par le capteur sont des mesures dans le référentiel du véhicule. Par exemple, le capteur peut fournir des mesures des accélérations selon au moins deux axes, notamment horizontal et vertical. Dans ce cas, la variation d'inclinaison peut être obtenue à partir des accélérations du véhicule mesurées selon ces deux axes.

Selon d'autres caractéristiques additionnelles possibles :

- le procédé comporte de préférence une étape préliminaire d'initialisation dans laquelle une mesure d'inclinaison du véhicule, destinée à calculer une première variation d'inclinaison, est réalisée lorsque le véhicule est placé sur une zone plane horizontale ;
- le procédé peut comporter une étape de mesure de la vitesse du véhicule, et ledit premier instant correspond à l'instant auquel la valeur absolue de la vitesse mesurée du véhicule est inférieure ou égale à une valeur seuil, notamment s'annule ; la vitesse mesurée peut indifféremment être positive ou négative. Par exemple, la valeur seuil peut être de 2 km/h ;

- le procédé peut comporter une étape de calcul d'une inclinaison du véhicule avant l'unique arrêt du véhicule en fonction des mesures d'accélérations du véhicule par le capteur ; l'inclinaison du véhicule avant l'unique arrêt du véhicule correspond ainsi à l'inclinaison au premier instant ;
- l'inclinaison du véhicule est calculée de façon périodique, et l'inclinaison du véhicule avant l'unique arrêt correspond à la dernière inclinaison calculée avant ledit unique arrêt ; la période de calcul peut par exemple être de 3 ms ;
- en variante, l'inclinaison du véhicule étant calculée de façon périodique, et l'inclinaison du véhicule avant l'unique arrêt correspond à une valeur moyenne d'un nombre prédéterminé d'inclinaisons calculées avant ledit unique arrêt ; par exemple l'inclinaison du véhicule avant l'unique arrêt peut correspondre à la valeur moyenne des dix dernières inclinaisons calculées avant l'unique arrêt ;
- le deuxième instant peut alors correspondre à un instant auquel la vitesse mesurée du véhicule devient supérieure à zéro, notamment à ladite valeur seuil ;

- le procédé peut comporter une étape de calcul d'une inclinaison du véhicule après l'unique arrêt du véhicule en fonction des mesures d'accélérations du véhicule par le capteur ;
- l'inclinaison du véhicule étant calculée de façon périodique, l'inclinaison du véhicule après l'unique arrêt correspond à la première inclinaison calculée après ledit unique arrêt ; dans ce cas, l'inclinaison du véhicule après l'unique arrêt du véhicule correspond ainsi à l'inclinaison au deuxième instant ; dans ce mode de réalisation, l'étape périodique de calcul de l'inclinaison du véhicule est suspendue pendant l'arrêt du véhicule ;
- en variante, l'inclinaison du véhicule étant calculée de façon périodique, l'inclinaison du véhicule après l'unique arrêt correspond à la dernière inclinaison calculée pendant ledit unique arrêt ; dans ce cas, la dernière inclinaison du véhicule pendant l'unique arrêt du véhicule correspond ainsi à l'inclinaison au deuxième instant ; dans ce mode de réalisation, l'étape périodique de calcul de l'inclinaison du véhicule est maintenue pendant l'arrêt du véhicule, par exemple selon une autre période, notamment de 100ms.
- le procédé comporte de préférence une étape de mesure de l'accélération dudit véhicule ; dans ce cas, une mesure d'inclinaison du véhicule fournie par le capteur est pas prise en considération dans l'étape de calcul uniquement si l'accélération mesurée du véhicule est inférieure à une valeur seuil prédéfinie ;
- si une étape d'arrêt du moteur intervient pendant la durée au cours de laquelle le véhicule à moteur marque un unique arrêt suivi d'un redémarrage, le procédé comporte en outre une étape de mémorisation de la dernière mesure d'inclinaison de véhicule mesurée par le capteur et de l'angle d'inclinaison des projecteurs.

L'invention a également pour objet un système de correction de l'inclinaison des projecteurs d'un véhicule à moteur, comportant au moins un capteur porté par le véhicule à moteur, ledit capteur étant apte à fournir des mesures d'accélérations du véhicule, un calculateur apte à calculer la variation d'inclinaison du véhicule entre un premier et un deuxième instants distincts définissant une durée au cours de laquelle ledit véhicule à moteur marque un unique arrêt suivi d'un redémarrage en fonction des mesures d'accélérations, et des moyens d'asservissement de l'inclinaison des projecteurs en fonction de la variation d'inclinaison du véhicule calculée.

Le capteur est un capteur de type accéléromètre à deux axes ou à trois axes.

En variante, le capteur est un gyroscope, ou plus généralement tout capteur dont le référentiel de mesure est le référentiel terrestre.

Dans un mode de réalisation possible, chaque projecteur équipant le véhicule intègre le capteur.

Selon une variante de réalisation préférée, pour un véhicule automobile équipé d'une paire de projecteurs, seul l'un des projecteurs comporte un capteur et le calculateur, l'inclinaison de l'autre projecteur étant asservie sur l'inclinaison du projecteur intégrant le capteur par l'intermédiaire d'une liaison, de préférence filaire, entre les deux projecteurs.

L'invention et les avantages qu'elle procure seront mieux compris au vu de la description suivante, faite en référence aux figures annexées, dans lesquelles :

- la figure 1a schématise un véhicule équipé d'un accéléromètre, et se déplaçant sur une route horizontale ;
- la figure 1b schématise ce même véhicule se déplaçant sur une pente montante ;
- la figure 2 donne un synoptique simplifié d'un exemple de procédé de correction conforme à la présente invention.

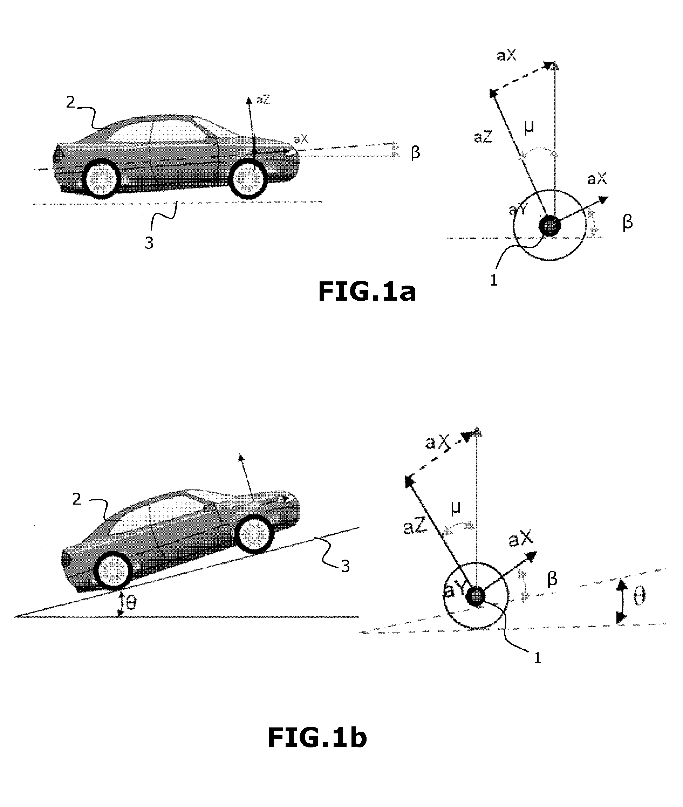

Les figures 1a et 1b illustrent schématiquement un capteur de type accéléromètre 1 équipant un véhicule 2 à l'arrêt ou se déplaçant sur une route 3, respectivement dans le cas d'une route horizontale et dans le cas d'une route en pente montante. Le référentiel (aX, aY, aZ) représenté à droite de chaque figure est le référentiel du véhicule.

Il existe plusieurs types d'accéléromètres sur le marché. Une des différences entre ceux-ci étant le nombre d'axes disponibles selon lesquels ils vont mesurer une accélération. Le capteur 1 peut être un capteur à deux axes. Néanmoins un capteur à trois axes peut être préférable dans la mesure où il permet également de tenir compte des effets de devers qui peuvent être non négligeables, et offrir ainsi plus de précision dans les mesures.

On suppose dans la suite, de manière non limitative, que le capteur 1 est un accéléromètre à deux axes (aX, aZ). La variation d'inclinaison peut être ainsi obtenue à partir des accélérations du véhicule mesurées selon ces deux axes.

La mesure d'inclinaison I délivrée par un accéléromètre relié au châssis d'un véhicule ou à la plateforme d'un module du projecteur créant le faisceau à asservir est donnée d'une part, par la relation :

$$I = a \times \tan\left(\frac{aX}{aZ}\right),$$

et d'autre part, par la relation :

$$I = \beta + \theta$$

dans laquelle, $\theta$ correspond à l'inclinaison de la route par rapport à l'horizontale, et β correspond à l'inclinaison du véhicule sur la route.

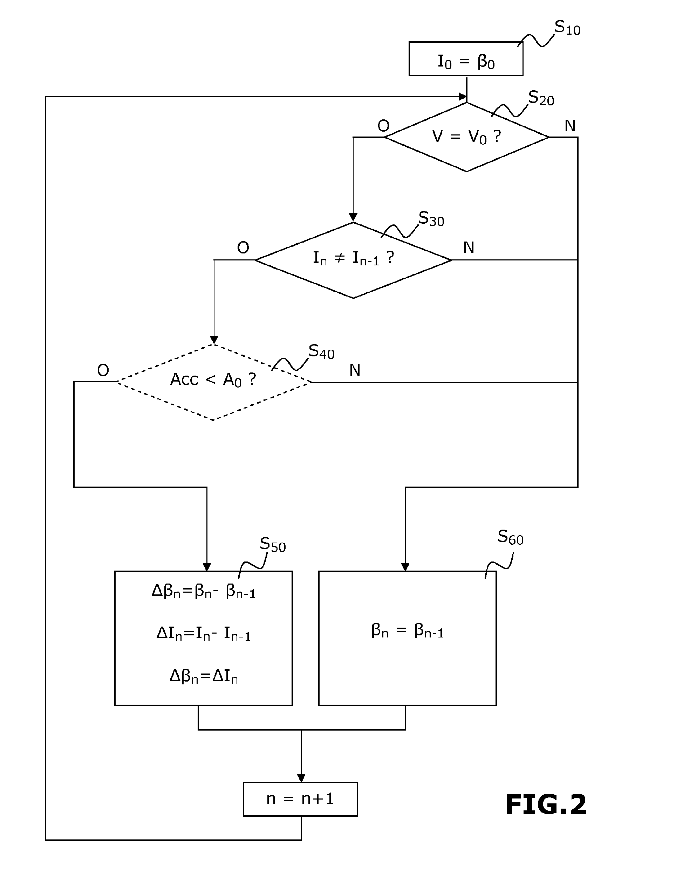

La figure 2 illustre, sous forme de synoptique simplifié, différentes étapes mises en oeuvre dans un procédé de correction de l'inclinaison de projecteurs, conformément à l'invention, permettant de s'affranchir de la problématique de la connaissance a priori des pentes de la route.

Le procédé repose sur les deux constats suivants :

La variation d'inclinaison d'un véhicule due à la variation de charge de celui-ci ne peut se faire que lorsque le véhicule est à l'arrêt.

En outre, la variation d'inclinaison d'un véhicule à l'arrêt est nécessairement liée à une variation de charge.

Fort de ces deux constats, un procédé de correction selon la présente invention consiste à mesurer la variation d'inclinaison à chaque arrêt et redémarrage de ce dernier, et à piloter en relatif le mouvement des projecteurs pour l'asservir à cette variation d'inclinaison.

Dans la suite, les notations suivantes sont utilisées :

- $I_0$ et $\beta_0$ sont les valeurs initiales correspondant respectivement à l'angle mesuré par le capteur accéléromètre 1 et à l'angle d'inclinaison des projecteurs par rapport au véhicule, à corriger en fonction de la charge de ce dernier ;
- $I_n$ est la mesure donnée par l'accéléromètre 1 à l'instant n ;
- $\beta_n$ est l'angle d'inclinaison des projecteurs à l'instant n ;
- $\Delta I_n$ est la variation entre deux mesures données par l'accéléromètre à deux instants successifs (n-1) et n ;
- $\Delta\beta_n$ est la variation entre deux angles d'inclinaison des projecteurs à deux instants successifs (n-1) et n.

L'étape $S_{10}$ dite d'initialisation représentée sur la figure 2 correspond au moment où le véhicule sort du garage ou d'une station-service. La pente de la route est alors considérée comme nulle, de sorte que l'on a la relation :

$$I_0 = \beta_0$$

La vitesse du véhicule étant mesurée par ailleurs, il est possible d'identifier l'instant auquel le véhicule s'arrête, c'est-à-dire l'instant auquel la vitesse mesurée du véhicule s'annule (étape $S_{20}$), puis l'instant auquel le véhicule redémarre, c'est-à-dire l'instant auquel la vitesse mesurée du véhicule devient à nouveau supérieure à zéro.

Les mesures $I_{n-1}$ et $I_n$ d'inclinaison du véhicule fournies par le capteur 1 sont alors comparées (étape $S_{30}$).

Compte-tenu des deux constats réalisés précédemment, une variation $\Delta I_n$ non nulle ne peut être obtenue que dans le cas où la charge du véhicule a été modifiée entre ces deux instants, par exemple si des passagers sont montés ou descendus du véhicule dans l'intervalle. Pour répondre à la règlementation, le mouvement des projecteurs est alors asservi en fonction de la variation $\Delta I_n$. En d'autres termes, l'inclinaison des projecteurs est modifiée pour satisfaire à l'équation montrée à l'étape $S_{50}$ :

$$\Delta\beta_n = \beta_n - \beta_{n-1} = \Delta I_n = I_n - I_{n-1}$$

A l'inverse, aucune modification dans l'inclinaison des projecteurs n'est réalisée si aucune variation dans la mesure fournie par l'accéléromètre 1 n'a été détectée. Ce cas est représenté sur la figure 2 par l'étape $S_{60}$ pour laquelle l'inclinaison $\beta_n$ est inchangée par rapport à l'inclinaison $\beta_{n-1}$.

On n'obtient donc pas de mesure absolue de l'inclinaison du véhicule due à la charge mais l'information relative obtenue en comparaison de l'état précédent est nécessaire et suffisante pour le réglage des projecteurs de façon automatique en mode statique / dynamique.

De façon optionnelle, le procédé peut également comporter une étape de mesure de l'accélération Acc dudit véhicule et de comparaison de l'accélération mesurée à une valeur seuil prédéfinie $A_0$ (étape $S_{40}$). Ceci permet avantageusement de prendre en compte, dans l'étape de calcul, une mesure d'inclinaison du véhicule fournie par le capteur uniquement lorsque l'accélération mesurée du véhicule est inférieure à cette valeur seuil prédéfinie. On pallie ainsi à des erreurs de mesure dues à un mouvement brusque de la caisse du véhicule, par exemple lorsque l'automobiliste actionne le frein à main.

Enfin $I_n$ et $\beta_n$ sont donnés dans la figure à titre d'exemple. En pratique, $I_n$ et $\beta_n$ sont issus d'une série de mesures moyennées sur une période T de l'ordre de quelques ms ou de quelques secondes.

Ainsi on assure la robustesse du système et sa réactivité aux changements de charge successifs à l'arrêt du véhicule.

Dans une autre implémentation possible d'un procédé conforme à l'invention, la correction d'inclinaison appliquée aux projecteurs est issue de la dernière variation d'inclinaison de véhicule mesurée par le capteur juste avant que le véhicule ne s'arrête. Cette variante présente l'avantage de ne pas surmultiplier les corrections d'inclinaison du module d'éclairage et nécessite de prévoir deux zones de stockage de la mesure d'inclinaison du véhicule. Selon cette variante, dès que la vitesse mesurée du véhicule passe en deçà d'une valeur seuil $V_0$ prédéterminée et non nulle, par exemple de l'ordre de 2 km/heure, l'accéléromètre 1 fournit une mesure $I_n$ de l'inclinaison du véhicule, cette mesure étant stockée en mémoire.

Tant que la vitesse du véhicule reste inférieure à la valeur seuil $V_0$, le capteur 1 continue de mesurer périodiquement, par exemple toutes les 10 millisecondes, l'inclinaison du véhicule. La valeur mesurée périodiquement est lissée pour obtenir une valeur d'inclinaison périodique moyenne disons sur 100ms (valeurs données à titre d'exemple uniquement), et la valeur moyenne est stockée à chaque fin de période, en remplaçant la valeur précédente.

A l'instant auquel la vitesse mesurée du véhicule repasse au-dessus de la valeur seuil $V_0$, le capteur 1 mesure à nouveau l'inclinaison du véhicule et le système de correction calcule la variation $\Delta I$ obtenue par rapport à la dernière valeur moyenne stockée. Tout comme dans le cas précédent, la variation $\Delta\beta$ dans l'inclinaison des projecteurs est asservie sur la variation $\Delta I$ ainsi calculée.

On notera que les procédés de correction décrits ci-dessus et conformes à l'invention ne permettent pas le réglage automatique de la hauteur des projecteurs en mode dynamique pur. En d'autres termes, on ne tient pas compte des variations d'inclinaison de caisse du véhicule dues à la dynamique véhicule (dues aux accélérations/ décélérations du véhicule par exemple ou dues à des accidents de chaussées telles que les pavés les nids de poule ou les dos d'âne). Cette fonctionnalité n'est cependant pas demandée par la réglementation.

Par ailleurs, dans tous les cas, si une étape d'arrêt du moteur intervient pendant la durée au cours de laquelle le véhicule à moteur marque un unique arrêt suivi d'un redémarrage, le système doit mémoriser la dernière mesure d'inclinaison de véhicule mesurée par le capteur 1 et l'angle d'inclinaison des projecteurs.

Les procédés de correction précédemment décrits peuvent être mis en oeuvre par différentes architectures de système :

On peut par exemple prévoir de positionner un capteur de type accéléromètre sur le châssis du véhicule, et d'asservir en inclinaison la paire de projecteurs équipant le véhicule par l'intermédiaire d'une liaison de communication, de préférence filaire (par exemple de type Bus LIN, Bus CAN, ou liaison directe).

Une autre mise en oeuvre particulièrement avantageuse consiste à intégrer le capteur de type accéléromètre et le calculateur apte à traiter les différentes mesures et à piloter le mouvement des projecteurs à l'intérieur du projecteur du véhicule. Idéalement, un seul des deux projecteurs d'une même paire intègrera le capteur, et une liaison de communication, de préférence filaire, est prévue entre les deux projecteurs de manière à ce que le mouvement des deux projecteurs puisse être piloté de la même manière.

Pour prendre en compte les possibles dérives du système au cours du temps, on prévoit avantageusement des procédures de réinitialisation régulières. En particulier, on peut prévoir une réinitialisation tous les 10 000 kilomètres, lors du passage du véhicule en révision dans un garage. D'autres réinitialisations intermédiaires peuvent être également envisagées lors du passage dans une station-service, par exemple tous les 600 kilomètres.

Lors de ces procédures de réinitialisation, le véhicule est placé sur une zone plane horizontale, ce qui permet d'obtenir une mesure absolue de l'inclinaison du véhicule.

**Revendications**

1. Procédé de correction de l'inclinaison des projecteurs d'un véhicule (2) à moteur à partir de mesures d'accélérations du véhicule fournies par un capteur (1) porté par le véhicule à moteur, le procédé comportant une étape ($S_{30}$) de calcul de la variation d'inclinaison du véhicule entre un premier et un deuxième instants distincts définissant une durée au cours de laquelle ledit véhicule à moteur marque un unique arrêt suivi d'un redémarrage, la variation d'inclinaison étant calculée en fonction des mesures d'accélérations, et une étape ($S_{50}$, $S_{60}$) d'asservissement de l'inclinaison des projecteurs en fonction de la variation d'inclinaison du véhicule calculée.

2. Procédé de correction selon la revendication 1, **caractérisé en ce qu'**il comporte une étape ($S_{20}$) de mesure de la vitesse du véhicule, et **en ce que** ledit premier instant correspond à l'instant auquel la valeur absolue de la vitesse mesurée du véhicule est inférieure ou égale à une valeur seuil, notamment s'annule.

3. Procédé de correction selon la revendication 2, **caractérisé en ce qu'**il comporte une étape de calcul d'une inclinaison du véhicule avant l'unique arrêt du véhicule en fonction des mesures d'accélérations du véhicule par le capteur (1).

4. Procédé de correction selon la revendication 3, **caractérisé en ce que**, l'inclinaison du véhicule étant calculée de façon périodique, l'inclinaison du véhicule avant l'unique arrêt correspond à la dernière inclinaison calculée avant ledit unique arrêt.

5. Procédé de correction selon la revendication 3, **caractérisé en ce que**, l'inclinaison du véhicule étant calculée de façon périodique, l'inclinaison du véhicule avant l'unique arrêt correspond à une valeur moyenne d'un nombre prédéterminé d'inclinaisons calculées avant ledit unique arrêt.

6. Procédé de correction selon l'une des revendications 3 à 5, **caractérisé en ce que** le deuxième instant correspond à un instant auquel la vitesse mesurée du véhicule devient supérieure à zéro, notamment à ladite valeur seuil.

7. Procédé de correction selon la revendication 6, **caractérisé en ce qu'**il comporte une étape de calcul d'une inclinaison du véhicule après l'unique arrêt du véhicule en fonction des mesures d'accélérations du véhicule par le capteur (1).

8. Procédé de correction selon la revendication 7, **caractérisé en ce que**, l'inclinaison du véhicule étant calculée de façon périodique, l'inclinaison du véhicule après l'unique arrêt correspond à la première inclinaison calculée après ledit unique arrêt.

9. Procédé de correction selon la revendication 7, **caractérisé en ce que** l'inclinaison du véhicule étant calculée de façon périodique, l'inclinaison du véhicule après l'unique arrêt correspond à la dernière inclinaison calculée pendant ledit unique arrêt

10. Procédé de correction selon l'une quelconque des revendications précédentes, **caractérisé en ce qu'**il comporte en outre une étape ($S_{40}$) de mesure de l'accélération dudit véhicule, et **en ce qu'**une mesure d'inclinaison du véhicule fournie par le capteur est prise en considération dans l'étape de calcul uniquement si l'accélération mesurée du véhicule est inférieure à une valeur seuil prédéfinie.

11. Procédé de correction selon l'une quelconque des revendications précédentes, **caractérisé en ce que**, si une étape d'arrêt du moteur intervient pendant la durée au cours de laquelle le véhicule à moteur marque un unique arrêt suivi d'un redémarrage, le procédé comporte en outre une étape de mémorisation de la dernière mesure d'inclinaison de véhicule mesurée par le capteur (1) et de l'angle d'inclinaison des projecteurs.

12. Système de correction de l'inclinaison des projecteurs d'un véhicule (2) à moteur, comportant au moins un capteur (1) porté par le véhicule à moteur, ledit capteur (1) étant apte à fournir des mesures d'accélérations du véhicule, un calculateur apte à calculer la variation d'inclinaison du véhicule entre un premier et un deuxième instants distincts définissant une durée au cours de laquelle ledit véhicule à moteur marque un unique arrêt suivi d'un redémarrage en fonction des mesures d'accélérations, et des moyens d'asservissement de l'inclinaison des projecteurs en fonction de la variation d'inclinaison du véhicule calculée.

13. Système de correction selon la revendication 12, **caractérisé en ce que** le capteur (1) est un capteur de type accéléromètre à deux axes ou à trois axes.

14. Système de correction selon l'une quelconque des revendications 12 et 13, **caractérisé en ce que** ledit au moins un capteur (1) et le calculateur sont intégrés dans l'un des projecteurs.

15. Système de correction selon la revendication 14, **caractérisé en ce qu'**il comporte en outre une liaison de communication entre le projecteur intégrant le capteur (1) et le calculateur et l'autre projecteur pour permettre d'asservir également l'inclinaison dudit autre projecteur.

**FIG.1a**

**FIG.1b**

**FIG.2**

**EP 2 952 385 A1**

| | Europäisches Patentamt |
|---|---|
| | European Patent Office |
| | Office européen des brevets |

**RAPPORT DE RECHERCHE EUROPEENNE**

Numéro de la demande

EP 15 16 9127

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 2 524 840 A2 (KOITO MFG CO LTD [JP]) 21 novembre 2012 (2012-11-21) * revendications 1-4; figures 1-5 * * alinéas [0004], [0005], [0018], [0019], [0025] - [0027] * ----- | 1-15 | INV. B60Q1/10 B60Q1/00 |
| A | EP 2 708 417 A2 (VALEO SCHALTER & SENSOREN GMBH [DE]) 19 mars 2014 (2014-03-19) * revendications 1-15; figures 1-9 * ----- | 1-15 | |
| A | JP 2009 126268 A (PANASONIC CORP) 11 juin 2009 (2009-06-11) * abrégé; figures 1-5 * ----- | 1-15 | |

DOMAINES TECHNIQUES RECHERCHES (IPC)

B60Q

Le présent rapport a été établi pour toutes les revendications

| Lieu de la recherche | Date d'achèvement de la recherche | Examinateur |
|---|---|---|
| Munich | 24 septembre 2015 | Giraud, Pierre |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 15 16 9127

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-09-2015

| Document brevet cité au rapport de recherche | | Date de publication | Membre(s) de la famille de brevet(s) | | Date de publication |
|---|---|---|---|---|---|
| EP 2524840 | A2 | 21-11-2012 | CN | 102785609 A | 21-11-2012 |
| | | | EP | 2524840 A2 | 21-11-2012 |
| | | | JP | 5749074 B2 | 15-07-2015 |
| | | | JP | 2012240512 A | 10-12-2012 |
| | | | US | 2012294020 A1 | 22-11-2012 |
| EP 2708417 | A2 | 19-03-2014 | DE | 102012021640 A1 | 13-03-2014 |
| | | | EP | 2708417 A2 | 19-03-2014 |
| JP 2009126268 | A | 11-06-2009 | AUCUN | | |

EPO FORM P0460